**Europäisches Patentamt**

**European Patent Office**

**Office européen des brevets**

(19)

(11) Veröffentlichungsnummer: **0 004 962**

**A1**

(12) # EUROPÄISCHE PATENTANMELDUNG

(21) Anmeldenummer: **79101163.8**

(22) Anmeldetag: **17.04.79**

(51) Int. Cl.²: **H 01 J 17/14**
**G 01 J 3/10**

(30) Priorität: **20.04.78 DE 2817310**
**23.09.78 DE 2841577**

(43) Veröffentlichungstag der Anmeldung:
**31.10.79 Patentblatt 79/22**

(84) Benannte Vertragsstaaten:
**BE CH DE FR GB IT NL SE**

(71) Anmelder: **VACUUMSCHMELZE GMBH**
**Bereich Verträge und Patente Grüner Weg 37 Postfach 109**
**D-6450 Hanau 1(DE)**

(72) Erfinder: **Grimm, Werner, Dr.**
**Kantstrasse 3**
**D-6450 Hanau 1(DE)**

(54) **Glimmentladungslampe zur qualitativen und quantitativen Spektralanalyse.**

(57) Die Erfindung betrifft eine Glimmentladungslampe zur qualitativen und quantitativen Spektralanalyse mit einem kathodenseitig durch eine auf Kathodenpotential befindliche, elektrisch leitende Scheibe 8 abschließbaren Entladungsraum 3. Zur Erhöhung der Lichtintensität und der Analysengenauigkeit sind erfindungsgemäß Mittel zum Erzeugen eines im Entladungsraum 3 im wesentlichen in axialer Richtung verlaufenden Magnetfeldes vorgesehen. Diese Mittel können insbesondere aus einem in axialer Richtung magnetisierten Ringmagneten 32 aus Permanentmagnetmaterial bestehen. Koaxial zu diesem Ringmagneten kann ferner ein regelbarer Elektromagnet 33 vorgesehen sein.

Die Glimmentladungslampe eignet sich zur Analyse von festen, flüssigen und gasförmigen Substanzen.

Fig. 2

EP 0 004 962 A1

VACUUMSCHMELZE GMBH       Unser Zeichen

Hanau       VP 78 P 9553 kb

## Glimmentladungslampe zur qualitativen und quantitativen Spektralanalyse

Die Erfindung betrifft eine Glimmentladungslampe zur qualitativen und quantitativen Spektralanalyse mit einem kathodenseitig durch eine auf Kathodenpotential befindliche, elektrisch leitende Scheibe abschließbaren Entladungsraum.

Bei Analysen, die beispielsweise zur Produktionsüberwachung oder zur routinemäßigen Materialkontrolle dienen, besteht die Forderung, schnell und ohne großen Arbeitsaufwand die Bestandteile einer Substanz oder deren Konzentration mit kleiner Fehlerbreite zu ermitteln. Oft stehen hierfür auch nur geringe Substanzmengen zur Verfügung.

Als besonders günstig für solche Analysen hat sich die optische Emissionsspektralanalyse unter Ausnutzung des Kathodenglimmlichtes der zu untersuchenden Substanzen

Kb/Bz / 15.02.1979

erwiesen. Als Arbeitsgas zur Erzeugung der Glimmentladung verwendet man im allgemeinen ein Edelgas, vorzugsweise Argon.

Als Lichtquelle zur Erzeugung des Kathodenglimmlichtes ist bereits eine Glimmentladungslampe bekannt, bei welcher der Anodenkörper kathodenseitig einen mit dem Anodenkörper verbundenen, elektrisch leitenden Stutzen besitzt und eine Scheibe aus elektrisch leitendem Material gegen die der Anode abgewandte Seite des den Stutzen umschließenden Kathodenkörpers gedrückt wird, wobei der Abstand zwischen dem Stutzen und der praktisch ebenen Oberfläche der Scheibe 0,05 bis 0,5 mm beträgt. Das Arbeitsgas wird bei dieser Glimmentladungslampe durch den Spalt zwischen dem Stutzen und der Oberfläche der Scheibe abgepumpt. Die Scheibe kann selbst ganz oder teilweise aus der zu analysierenden Substanz bestehen oder, falls diese flüssig ist, mit dieser getränkt sein. Ferner kann die zu analysierende Substanz auch auf die Scheibe aufgebracht sein oder, falls sie gasförmig ist, dem Arbeitsgas beigemischt werden (DE-PS 15 89 389). Weiterhin kann die Scheibe auch mit einer oder mehreren Bohrungen zur Aufnahme von drahtförmigen zu analysierenden Proben versehen sein (DE-PS 19 10 461).

Beim Betrieb dieser bekannten Glimmentladungslampe bildet sich über der auf Kathodenpotential liegenden Scheibe ein Kathodenglimmlicht hoher Lichtstärke, das durch die Bohrung des Anodenstutzens begrenzt wird. Die infolge des Beschusses mit Arbeitsgasionen kontinuierlich zerstäubte oder bereits in Gasform dem Arbeitsgas beigemischte zu analysierende Substanz wird im Kathodenglimmlicht zum Leuchten angeregt und läßt sich in diesem Zustand spektralanalytisch nachweisen und quantitativ bestimmen.

Die Analysengenauigkeit steigt dabei mit zunehmender Lichtintensität, also verstärkter Anregung der Atome der zu analysierenden Substanz, an. Um eine solche verstärkte Anregung zu erreichen, wurde bereits bei einer Glimmentladungslampe der bekannten Art zusätzlich zur Glimmentladung eine Hochstrom-Niederspannungs-Entladung vorgesehen. Durch diese zusätzliche Entladung wird die Elektronendichte im Entladungsraum und damit die Stoßzahl der Elektronen mit den Atomen der zu analysierenden Substanz erhöht. Der Aufbau der Glimmentladungslampe wird durch diese zusätzliche Entladung jedoch verhältnismäßig kompliziert, da zwei zusätzliche Elektroden erforderlich sind, die in unmittelbar am Entladungsraum mündende Glasröhrchen eingeschmolzen sind (Spectrochimica Acta 31 B (1976), Seiten 257 bis 261).

Der Erfindung liegt die Aufgabe zugrunde, bei einer Glimmentladungslampe der eingangs erwähnten Art die Lichtintensität und damit die Analysengenauigkeit bei vereinfachtem Aufbau zu erhöhen.

Diese Aufgabe wird erfindungsgemäß dadurch gelöst, daß Mittel zum Erzeugen eines im Entladungsraum im wesentlichen in axialer Richtung verlaufenden Magnetfeldes vorgesehen sind.

Durch dieses Magnetfeld werden die im Entladungsraum vorhandenen freien Elektronen auf Spiralbahnen gezwungen. Dadurch wird der Weg der Elektronen zur Anode verlängert und ihre Stoßzahl mit den im Plasma des Kathodenglimmlichtes befindlichen Atomen der zu analysierenden Substanz erhöht. Dies führt wiederum zu einer verstärkten Erzeugung von Sekundärelektronen und Ionen und damit zu einer verstärkten Anregung. Die Ionen, die die Zerstäubung der Kathodensubstanz bewirken, werden wegen ihrer sehr viel größeren Masse vom Magnetfeld nur wenig beeinflußt. Aufgrund ihrer Beschleunigung im elektrischen Feld des Kathodenfallgebietes tragen sie jedoch zu einem verstärkten Materialabbau der in oder auf der elektrisch leitenden Scheibe befindlichen, zu analysierenden Substanz bei. Dies erlaubt, sofern die zu analysierende Substanz nicht gerade in Gasform vorliegt, eine Reduzierung des Arbeitsdrucks von den bisher meist üblichen Werten von 800 bis 1200 Pa auf beispielsweise 130 bis 530 Pa.

Das Magnetfeld im Entladungsraum kann durch Elektromagnete oder Dauermagnete erzeugt werden. Ein üblicher Elektromagnet braucht jedoch verhältnismäßig viel Platz und muß zur Abführung der Verlustwärme auch verhältnismäßig stark gekühlt werden. Günstigere Verhältnisse können sich bei Verwendung einer Supraleitungsmagnetspule ergeben, insbesondere dann, wenn die zu analysierende Probe selbst auf sehr tiefer Temperatur gehalten werden soll. Als besonders günstig zur Erzeugung des Magnetfeldes im Entladungsraum haben sich Dauermagnete erwiesen.

Eine insbesondere wegen ihres einfachen Aufbaues bevorzugte Ausführungsform der erfindungsgemäßen Glimmentladungslampe ist daher derart ausgebildet, daß der Anodenkörper einen den Entladungsraum umschließenden, in axialer Richtung magnetisierten Ringmagneten aus Permanentmagnetmaterial enthält. Die auf Kathodenpotential befindliche Scheibe kann vorteilhaft an ein kathodenseitig am Anodenkörper oder Ringmagneten angeordnetes ringförmiges Isolierteil anpreßbar sein.

Vorzugsweise wird ein Ringmagnet aus Kobalt-Seltenerd-Material verwendet, da derartige Materialien besonders starke Magnetfelder besitzen. So haben Dauermagnete aus einer Legierung der Zusammensetzung $SmCo_5$ ein sehr hohes Energieprodukt $BH > 150 \text{ kJ/m}^3$, eine hohe Remanenzinduktion $B_r > 0{,}85$ T und eine hohe Koerzitivfeldstärke $_JH_c > 15\ 000$ A/cm.

Das Magnetfeld im Entladungsraum läßt sich vorteilhaft durch Mittel zur Konzentration des magnetischen Flusses im Entladungsraum weiter erhöhen. So kann vorteilhaft am Ringmagneten kathodenseitig ein Polring angebracht sein, der den magnetischen Fluß zum Entladungsraum hin konzentriert. Ferner kann auch an der von der Kathodenseite abgewandten Seite des Ringmagneten vorteilhaft ein Polring vorgesehen sein. Besonders günstig für den Magnetfeldverlauf ist es, wenn die Mittelöffnungen der Polringe sich mit zunehmendem Abstand vom Ringmagneten verengen. Derart geformte Polringe konzentrieren und stabilisieren das Magnetfeld im Entladungsraum und führen es gleichzeitig so nahe wie möglich an die Scheibenoberfläche heran. Der Abstand zwischen dem auf Anodenpotential befindlichen kathodenseitigen Polring und der anodenseitigen Oberfläche der
auf Kathodenpotential befindlichen Scheibe sollte so
klein wie möglich sein. Der günstigste Abstand beträgt,
um häufige Kurzschlüsse zu vermeiden, etwa 0,1 bis
0,3 mm.

Um Verzerrungen und Feldstärkenänderungen des Magnetfeldes durch aus der zu analysierenden Substanz bestehende oder diese enthaltende elektrisch leitende
Scheiben unterschiedlicher Abmessung aus ferromagnetischem Material zu vermeiden, kann ferner vorzugsweise zwischen Anodenkörper bzw. Ringmagnet und Scheibe
eine ringförmige Abschirmplatte aus weichmagnetischem
Material angeordnet sein. Diese Abschirmplatte kann
sich auf Kathodenpotential oder auf Anodenpotential
befinden, je nachdem, ob sie vom Anodenkörper oder
von der Scheibe durch eine Isolation getrennt ist.

Durch die im Entladungsraum auftretende Temperatur
wird das vom Permanentmagneten erzeugte Magnetfeld
verändert. Der Temperatureinfluß auf das Magnetfeld
wird durch den reversiblen Temperaturkoeffizienten
der Remanenz ausgedrückt, der bei $SmCo_5$ zwischen 25
und 250°C etwa -0,05 %/K beträgt. Zur Temperaturstabilisierung des Magnetfeldes kann der den Ringmagneten enthaltende Anodenkörper vorteilhaft mittels
Flüssigkeit kühlbar sein. Besonders günstig ist es,
wenn der Anodenkörper aus einem gut wärmeleitenden
Material besteht und wenigstens einen den Ringmagneten umschließenden Kühlkanal enthält. Die Temperaturstabilität des Magnetfeldes kann weiter noch dadurch verbessert werden, daß der Ringmagnet vom Entladungsraum durch ein Schutzrohr aus gut wärmeleitendem Material getrennt ist.

Im Gegensatz zu den bekannten Glimmentladungslampen muß das Arbeitsgas bei der anmeldungsgemäßen Glimmentladungslampe nicht durch einen Spalt zwischen der Anode und der auf Kathodenpotential befindlichen Scheibe abgepumpt werden. Vielmehr wird die anmeldungsgemäße Glimmentladungslampe bevorzugt derart aufgebaut, daß der Entladungsraum durch seine von der Kathodenseite abgewandte Öffnung abpumpbar ist. Zu- und Abführung des Arbeitsgases erfolgen dabei durch dieselbe Öffnung des Entladungsraumes.

Bei den bisher erwähnten Ausführungsformen der erfindungsgemäßen Glimmentladungslampe tritt ebenso wie bei den bekannten Glimmentladungslampen noch die Schwierigkeit auf, daß jeweils nur zwei die Glimmentladung bestimmende Parameter konstant gehalten werden können. In der Regel sind dies die freie Weglänge, d.h. der Druck im Entladungsraum, und die Beschleunigungsspannung. Hält man diese beiden Parameter fest, so stellt sich ein durch die Probenart bedingter spezifischer Entladungsstrom ein, der bei unterschiedlich zusammengesetzten Proben verschieden ist. Aber selbst bei gleicher Probenzusammensetzung kann die Stromstärke allein aufgrund unterschiedlicher Gefüge um einige Prozent um einen Mittelwert schwanken. Dies führt zu Intensitätsschwankungen des emittierten Lichtes und somit zu Meßungenauigkeiten.

Um derartige Fehler gering zu halten, wird in der Praxis
entweder über die Summe aller in der zu untersuchenden
Probe vorkommenden Elemente normiert oder einzelne Elemente werden auf ein Bezugselement bezogen. Im ersten
Fall führt die Normierung zu Ungenauigkeiten, während
im zweiten Fall alle Schwankungen des Bezugselementes
auf die Bestimmung der Einzelelemente übertragen werden.

Die durch die erläuterten Probenunterschiede bedingten
Analysenfehler können bei der anmeldungsgemäßen Glimmentladungslampe dadurch verringert werden, daß koaxial
zum Ringmagneten aus Permanentmagnetmaterial zusätzlich
ein regelbarer Elektromagnet vorgesehen ist.

Dieser Elektromagnet, dessen regelbares Magnetfeld sich
dem Magnetfeld des Permanentmagneten überlagert, ermöglicht eine Veränderung des Innenwiderstandes der Glimmentladungslampe und damit die Festlegung eines weiteren
Parameters der Entladung. Die Gefahr einer Um- oder
Entmagnetisierung des Permanentmagnetmaterials besteht
nicht, wenn man einen hinreichend starken Permanentmagneten verwendet, beispielsweise einen Magneten aus
Kobalt-Seltenerd-Material. Bei einem hinreichend starken Permanentmagneten läßt sich mit Hilfe des Elektromagneten eine ausreichende Feldänderung erreichen,
ohne daß das Magnetfeld des Elektromagneten, wenn es
dem des Permanentmagneten entgegengerichtet ist, die
Koerzitivkraft des Permanentmagneten überschreitet.

Wenn man, wie üblich, die Glimmentladungslampe mit konstanter Spannung betreibt, ist es besonders günstig, wenn der Elektromagnet derart regelbar ist, daß beim Betrieb der Glimmentladungslampe in dieser ein vorwählbarer konstanter Strom fließt. Die Vorwahl des Stromes wird man dann beispielsweise so vornehmen, daß man über eine ganze Probenserie mit konstantem Strom arbeiten kann. Dadurch läßt sich einerseits die Zahl der erforderlichen Eichproben verringern. Zum anderen werden probenbedingte Stromschwankungen durch die Regelung ausgeglichen.

Eine andere Regelungsmöglichkeit besteht darin, daß man bei Einsatz einer konstanten Stromquelle die Beschleunigungsspannung auf einen vorwählbaren konstanten Wert regelt. Man kann aber beispielsweise auch von der Lichtintensität der Entladung ausgehen und Strom oder Spannung oder beide derart regeln, daß die Lichtintensität einen vorwählbaren konstanten Wert annimmt.

Besonders günstig für das Zusammenwirken zwischen Permanentmagnet und Elektromagnet ist es, wenn der Ringmagnet aus Permanentmagnetmaterial und der Elektromagnet in axialer Richtung hintereinander innerhalb des Anodenkörpers angeordnet sind. Insbesondere ergeben sich günstigere Verhältnisse bezüglich der Streuung des Magnetfeldes als bei einem Elektromagneten, der den Permanentmagneten außen umschließt.

Weiterhin ist es zur Konzentration des magnetischen Flußes günstig, wenn der Elektromagnet einen Kern aus weichmagnetischem Material enthält, der rohrförmig ist, um den Lichtweg aus dem Entladungsraum durch den Elektromagneten hindurch offenzuhalten.

Zur Verringerung der Streuung ist es ferner vorteilhaft, wenn der Elektromagnet an seiner äußeren Mantelfläche und an seiner vom Ringmagneten abgewandten Stirnfläche von einem magnetischen Rückschluß aus weichmagnetischem Material umgeben ist.

Der magnetische Rückschluß kann ferner zur Abführung der im Elektromagneten erzeugten Wärme vorteilhaft mit dem vorzugsweise flüssigkeitsgekühlten Anodenkörper in gut wärmeleitender Verbindung stehen.

Anhand einiger Figuren und Ausführungsbeispiele soll die Erfindung noch näher erläutert werden.

Figur 1 zeigt schematisch im Schnitt eine bevorzugte Ausführungsform der erfindungsgemäßen Glimmentladungslampe.

Figur 2 zeigt schematisch im Schnitt eine weitere bevorzugte Ausführungsform der erfindungsgemäßen Glimmentladungslampe, bei der zusätzlich zu einem Ringmagneten aus Permanentmagnetmaterial ein regelbarer Elektromagnet vorgesehen ist.

Figur 3 zeigt ein Ausführungsbeispiel für eine Stromregelung einer Glimmentladungslampe gemäß Figur 2.

Figur 4 zeigt den Entladungsstrom bei Verwendung von Kupfer- und Eisen-Proben in Abhängigkeit vom Strom durch den Elektromagneten bei einer Glimmentladungslampe gemäß Figur 2.

Figur 5 zeigt die Intensität der Eisenlinie in Abhängigkeit vom Strom durch den Elektromagneten bei einer Glimmentladungslampe gemäß Figur 2.

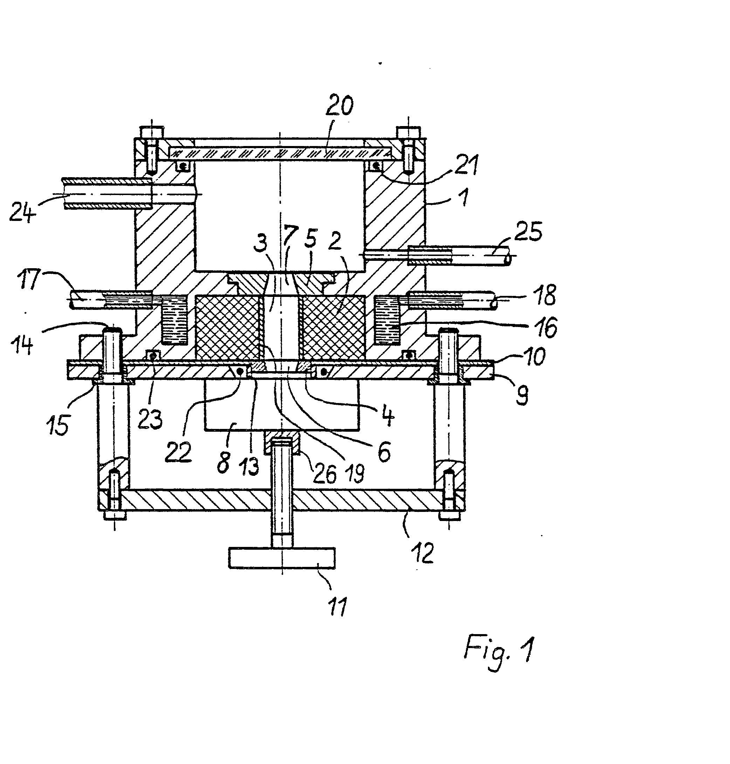

Bei der in Figur 1 dargestellten Ausführungsform der erfindungsgemäßen Glimmentladungslampe ist in einen Anodenkörper 1 mit kreisförmiger Grundfläche, der aus einem gut wärmeleitenden Material, beispielsweise aus Leitbronze oder einer Kupfer-Beryllium-Legierung besteht, ein in axialer Richtung magnetisierter Ringmagnet 2 eingepaßt. Dieser kann vorzugsweise aus einer $SmCo_5$-Legierung bestehen, etwa 15 mm dick sein und einen Außendurchmesser von 40 mm sowie einen Innendurchmesser von 10 mm haben. Das vom Ringmagneten 2 erzeugte Magnetfeld verläuft im Entladungsraum 3 im wesentlichen parallel zu dessen Mittelachse. Zur weiteren Konzentration des magnetischen Flußes im Entladungsraum 3 dienen zwei Polringe 4 und 5 an der Kathodenseite bzw. an der von dieser abgewandten Seite des Ringmagneten 2. Die Mittelöffnungen 6 und 7 der beiden Polringe 4 und 5 verengen sich mit zunehmendem Abstand vom Ringmagneten 2 und bewirken daher eine besonders starke Konzentration des Magnetfeldes, dessen Feldlinien senkrecht aus den die Öffnungen 6 und 7 begrenzenden Flächen austreten, im Entladungsraum 3, insbesondere in dessen kathodennahem Bereich. Zwischen der beispielsweise aus der zu analysierenden Substanz bestehenden, elektrisch leitenden Scheibe 8 und dem Ringmagneten 2 bzw. dem Anodenkörper 1 ist ferner eine ringförmige Abschirmplatte 9 aus weichmagnetischem Material vorgesehen, die einen Übertritt der den Ringmagneten 2 außen umfassenden Feldlinien in die Scheibe 8 und damit Feldverzerrungen aufgrund unterschiedlicher Größen oder Lagen der Scheibe 8 verhindert. Als Material für die Polringe 4 und 5 und die Abschirmplatte 9 eignen sich vorzugsweise weichmagnetische Legierungen mit hoher Sättigung, beispielsweise eine Kobalt-Eisen-Legierung aus etwa 49 Gewichts-% Kobalt, 2 Gewichts-% Vanadium, Rest Eisen mit einer Sättigungsinduktion von etwa 2,35 T.

Die Abschirmplatte 9 ist vom Ringmagneten 2 und vom Anodenkörper 1 durch eine ringförmige, beispielsweise 0,3 mm dicke, Isolierscheibe 10 getrennt und befindet sich auf Kathodenpotential. Die Scheibe 8 wird mittels einer Andruckschraube 11, die in einer Halterung 12 geführt und mittels einer Isolierkappe 26 gegen die Scheibe 8 isoliert ist, gegen ein ringförmiges Isolierteil 13 gepreßt, das kathodenseitig am Ringmagneten 2 angeordnet ist und beispielsweise 2 mm dick sein kann. Die Isolierscheibe 10, das Isolierteil 13 und die Isolierkappe 26 können beispielsweise aus Polytetrafluoräthylen bestehen. Der Anodenkörper 1 und die Abschirmplatte 9 werden durch zwei Schraubenansätze 14 zusammengehalten, die sich an den Enden der Seitenträger der Halterung 12 befinden und gegen die Abschirmplatte 9 durch Isoliermuffen 15 isoliert sind.

Um die durch die Entladung entstehende Wärme abzuleiten, insbesondere den Ringmagneten 2 auf konstanter Temperatur zu halten, ist im Anodenkörper 1 ein den Ringmagneten 2 umschließender Kühlkanal 16 vorgesehen.

Er kann beispielsweise dadurch hergestellt werden, daß man in den Anodenkörper 1 von der Kathodenseite her eine Ringnut eindreht und diese dann wieder verschließt, beispielsweise verlötet. Der Rohrstutzen 17 dient zur Zufuhr, der Rohrstutzen 18 zur Abführung des Kühlwassers. Ebenfalls zur Wärmeabfuhr dient ein den Ringmagneten 2 vom Entladungsraum 3 trennendes Schutzrohr 19, beispielsweise aus Kupfer mit 0,5 mm Wandstärke.

Spektrographenseitig ist der Anodenkörper 1 durch ein lichtdurchlässiges Fenster 20, beispielsweise aus plangeschliffenem Quarzglas, abgeschlossen. Die O-Ringe 21, 22 und 23 dienen zur vakuumdichten Abdichtung des Innenraumes der Glimmentladungslampe. Das Arbeitsgas, vorzugsweise reinstes Argon, wird zum Betrieb der Glimmentladungslampe kontinuierlich durch den Gaseinlaßstutzen 24 eingeleitet. Der Arbeitsgasdruck wird durch stetiges Abpumpen über den Pumpstutzen 25 eingestellt. Dem eigentlichen Entladungsraum 3 wird das Arbeitsgas dabei durch die von der Kathodenseite abgewandte Öffnung 7 zugeführt, durch die es auch wieder abgeführt wird. Der Probenwechsel kann mit Hilfe der Schraube 11 einfach und sehr rasch erfolgen. Bei jedem Probenwechsel wird zweckmäßigerweise die innere Kante des Polrings 4 mechanisch gereinigt, beispielsweise mit Hilfe eines Messingstabes, und mit trockener Preßluft abgeblasen. Auch eine gründlichere Reinigung läßt sich durch Abziehen des Polringes 4 und Herausziehen des Schutzrohres 19 schnell und einfach durchführen, ohne daß die Glimmentladungslampe demontiert werden muß.

0004962

Die Glimmentladungslampe gemäß diesem Ausführungsbeispiel wurde bei einem 1,5 m-Gitterspektrometer mit einem Spektralbereich von 200 bis 450 nm eingesetzt. Als Meßproben wurden Scheiben 8 aus der jeweils zu analysierenden Substanz verwendet. Zur Beseitigung von Oberflächenverunreinigungen und zur Einstellung des Temperaturgleichgewichtes der Proben wurde bei jeder Messung zunächst 10 Sek. lang mit einer Spannung von 1000 V und anschließend 90 Sek. lang mit einer Spannung von 800 V eingebrannt. Der durch die Öffnung 6 des Polrings 4 begrenzte Brennfleckdurchmesser betrug etwa 7 mm. Jeweils gegen Ende des Einbrennens wurde bei 800 V die Messung durchgeführt. Da die sich einstellende Stromstärke und damit die Menge des abgetragenen Materials und auch die Stärke der Anregung von Probenmaterial abhängt, wurde jeweils solange gemessen, bis die integrierte Ladung einen vorgewählten Wert erreicht hatte. Bei den nachfolgenden Beispielen betrug die Meßzeit dabei größenordnungsmäßig etwa 20 Sek.

In einem ersten Versuch wurden nacheinander sieben Proben der gleichen Charge einer weichmagnetischen Nickel-Eisen-Kupfer-Legierung quantitativ analysiert. Dabei wurden folgende Meßwerte erhalten:

| Element | Anteil in Gewichts-% | | |
|---------|------|---|------|
| Nickel | 69,98 | ± | 0,18 |
| Kupfer | 14,99 | ± | 0,08 |
| Eisen | 10,90 | ± | 0,07 |
| Molybdän | 2,97 | ± | 0,04 |
| Mangan | 0,994 | ± | 0,011 |
| Silizium | 0,163 | ± | 0,004 |

Der Arbeitsgasdruck bei dieser Messung betrug etwa
450 Pa, der Strom bei 800 V etwa 80 mA.

Bei einem zweiten Versuch wurden sechs Proben der gleichen Charge einer nichtferromagnetischen Kobalt-Nickel-
Chrom-Legierung quantitativ analysiert. Dabei wurden
folgende Meßwerte erhalten:

| Element | Anteil in Gewichts-% | | |
|---------|------|---|-------|
| Kobalt | 41,65 | ± | 0,16 |
| Nickel | 24,94 | ± | 0,14 |
| Chrom | 12,19 | ± | 0,04 |
| Eisen | 8,47 | ± | 0,13 |
| Wolfram | 4,14 | ± | 0,05 |
| Molybdän | 4,09 | ± | 0,06 |
| Titan | 2,04 | ± | 0,06 |
| Mangan | 1,04 | ± | 0,02 |
| Aluminium | 0,871 | ± | 0,013 |
| Silizium | 0,527 | ± | 0,008 |
| Kupfer | 0,024 | ± | 0,004 |
| Beryllium | 0,0088 | ± | 0,0004 |

Der Arbeitsgasdruck betrug etwa 400 Pa, der Strom bei
800 V etwa 94 mA.

Die bei den Versuchsergebnissen angegebenen Fehler entsprechen der 2$\sigma$-Standardabweichung der Gauß-Statistik,
das heißt einer statistischen Sicherheit von 95,4 %.
Wie aus den Meßwerten ersichtlich ist, sind die erreichten Genauigkeiten sehr hoch. So beträgt beispielsweise
bei hohen Konzentrationen, wie beim Nickelgehalt der weichmagnetischen Legierung, die relative Standardabweichung nur 0,26 %. Damit reicht die Genauigkeit der Emissionsspektralanalyse bei Verwendung der anmeldungsgemäßen Glimmentladungslampe bereits an die Genauigkeit der Röntgenfluoreszensanalyse heran.

Wie stark durch Verwendung der anmeldungsgemäßen Glimmentladungslampe der Materialabbau von der Probenoberfläche erhöht wird, zeigt ein Vergleich zweier Messungen an einer Kupfer- und einer Nickel-Probe mittels einer anmeldungsgemäßen Glimmentladungslampe nach dem vorstehenden Ausführungsbeispiel und einer bekannten Glimmentladungslampe nach DE-PS 15 89 389. Die angelegte Spannung betrug jeweils 800 V. Der Arbeitsgasdruck betrug bei der anmeldungsgemäßen Glimmentladungslampe 400 Pa und bei der Glimmentladungslampe nach dem Stande der Technik 930 Pa. Die Abtragungsrate betrug bei der anmeldungsgemäßen Glimmentladungslampe für Kupfer 112 mg/A min cm$^2$ und für Nickel 52 mg/A min cm$^2$. Bei der Glimmentladungslampe gemäß dem Stande der Technik betrug die Abtragungsrate dagegen für Kupfer nur 57 mg/A min cm$^2$ und für Nickel 30 mg/A min cm$^2$.

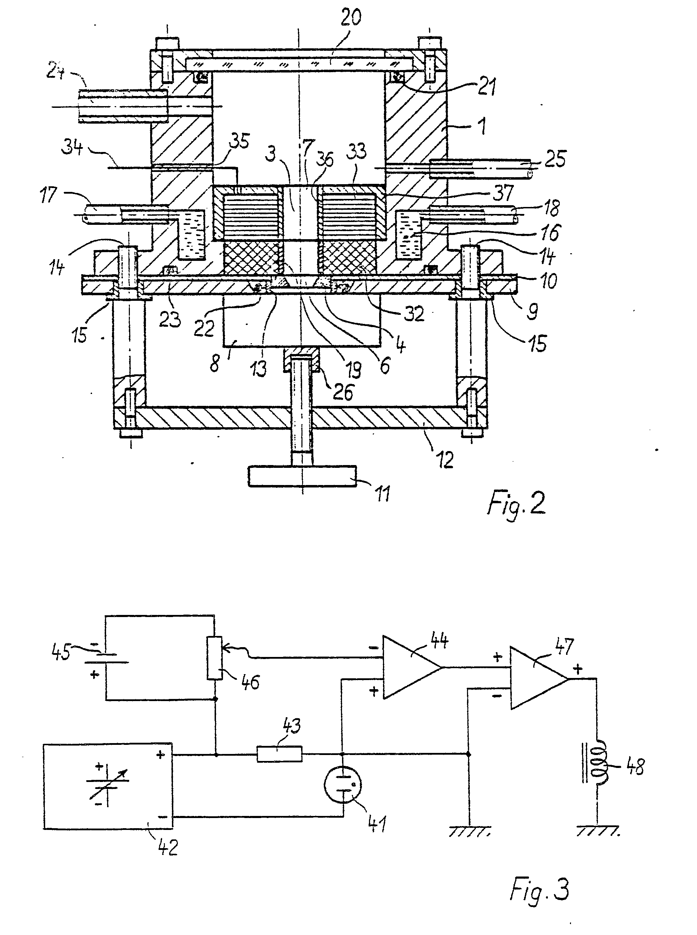

Die in Figur 2 dargestellte Ausführungsform der erfindungsgemäßen Glimmentladungslampe unterscheidet sich von der Ausführungsform nach Figur 1 im wesentlichen dadurch, daß der Ringmagnet 32 gegenüber dem Ringmagnet 2 in Figur 1 in der Dicke verringert ist und daß koaxial zum Ringmagneten 32 und in axialer Richtung hinter diesem ein Elektromagnet 33 angeordnet ist. Dieser kann beispielsweise eine Spule aus etwa 300 Windungen lackierten Kupferdrahtes mit einem Drahtdurchmesser von 0,8 mm sein und einen Außendurchmesser von 34 mm sowie einen Innendurchmesser von 11 mm haben. Der Ringmagnet 32 kann vorzugsweise aus einer SmCo$_5$-Legierung bestehen, etwa 7 mm dick sein und einen Außendurchmesser von etwa 34 mm und einen Innendurchmesser von etwa 11 mm haben. Ein Ende der Spulenwicklung des Elektromagneten 33 liegt an Masse, d.h. am Anodenkörper 1, das andere Ende 34 ist durch eine vakuumdichte Durchführung 35 isoliert aus dem Anodenkörper 1 herausgeführt. Im Elektromagneten 33 befindet sich ein rohrförmiger weichmagnetischer Kern 36, beispielsweise aus etwa 1 mm dickem Weicheisen. Die vom Ringmagneten 32 abgewandte Stirnseite und die äußere Mantelfläche des Elektromagneten 33 sind von einem weichmagnetischen Rückschluß 37, beispielsweise aus etwa 2 mm starkem Weicheisen, umgeben. Dieser Rückschluß ist in den Anodenkörper 1 so eingepaßt, daß sich eine gut wärmeleitende Verbindung ergibt. Statt aus Weicheisen können der rohrförmige Kern 36 und der magnetische Rückschluß 37 beispielsweise auch aus einer weichmagnetischen Legierung mit hoher Sättigung, z.B. aus 49 Gew.-% Kobalt, 2 Gew.-% Vanadin, Rest Eisen, bestehen. Die offene Stirnseite des Elektromagneten 33 liegt auf dem Ringmagneten 32. Es kann aber beispielsweise zwischen beiden auch eine Trennplatte aus Isoliermaterial oder aus gut wärmeleitendem, nichtmagnetischem Material, beispielsweise Messing, vorgesehen sein.

Zur weiteren Konzentration des magnetischen Flußes im Entladungsraum 3 dient lediglich ein Polring 4 an der Kathodenseite des Ringmagneten 32. In der Mitte der sich mit zunehmendem Abstand vom Ringmagneten 32 verengenden Mittelöffnung 6 des Polrings 4 erzeugt der Ringmagnet 32 eine magnetische Induktion von etwa 0,18 T.

Die übrigen Teile der Glimmentladungslampe nach Figur 2
entsprechen im wesentlichen den mit den gleichen Bezugsziffern bezeichneten Teilen von Figur 1.

Mit Hilfe des den Ringmagneten 32 und den Elektromagneten 33 außen umschließenden Kühlkanals 16 kann nicht nur
die durch die Entladung entstehende, sondern auch die im
Elektromagneten 33 entstehende Wärme abgeführt werden.
Ebenfalls zur Wärmeabfuhr dient das den Ringmagneten 32
vom Entladungsraum 3 trennende Schutzrohr 19, beispielsweise aus Kupfer mit 1 mm Wandstärke, das gegenüber
Figur 1 entsprechend der verringerten Dicke des Ringmagneten 32 verkürzt ist.

Die Regelung des Stromes durch den Elektromagneten 33
derart, daß durch die Glimmentladungslampe beim Betrieb
mit einer Konstantspannungsquelle unabhängig von den
durch die unterschiedlichen Proben bedingten Abweichungen jeweils ein konstanter vorgewählter Strom fließt,
kann mit Hilfe der in Figur 3 dargestellten Schaltungsanordnung erfolgen.

An die Glimmentladungslampe 41 wird dabei mit Hilfe
einer handelsüblichen Konstantspannungsquelle 42, die
beispielsweise auf Ausgangsspannungen zwischen 0,6 bis
1,6 kV einstellbar und für einen maximalen Gleichstrom
von 0,2 A ausgelegt ist, eine konstante Beschleunigungsspannung angelegt. Die Anode der Glimmentladungslampe 41 liegt dabei an Masse. Zwischen dem positiven Ausgang der Konstantspannungsquelle 42 und der Anode der Glimmentladungslampe 41 ist ein üblicherweise bereits in die Konstantspannungsquelle eingebauter Meßwiderstand 43 von beispielsweise 1 Ohm geschaltet. Die Spannung über diesem Meßwiderstand 43 ist ein Maß für den durch die Glimmentladungslampe 41 fließenden Entladungsstrom. Sie wird mittels eines Komparators 44 mit einer einstellbaren Referenzgleichspannung verglichen, die an einem beispielsweise parallel zu einer 2 V-Gleichstromquelle 45 liegenden Widerstand 46 abgegriffen wird. Über den Ausgang des Komparators 44 wird ein Leistungsverstärker 47, beispielsweise mit einer Strombegrenzung von ± 10 A, angesteuert, an dessen Ausgang ein Ende der Spulenwicklung des in die Glimmentladungslampe 41 eingebauten Elektromagneten 48 angeschlossen ist. Das andere Ende der Spulenwicklung liegt an Masse.

Als Komparator 44 und Leistungsverstärker 47 eignen sich handelsübliche Operationsverstärker mit sehr hohem Verstärkungsfaktor, wobei der Operationsverstärker für den Komparator 44 die Polarität der Eingangsspannung invertiert, während der Operationsverstärker für den Leistungsverstärker 47 nichtinvertierend ausgebildet ist.

Die Wicklung des Elektromagneten 48 ist so geschaltet, daß das Magnetfeld der Spulenwicklung das Magnetfeld des Permanentmagneten verstärkt, wenn die am Widerstand 43 abgegriffene Spannung kleiner ist als die am Widerstand 46 eingestellte Referenzspannung. Infolge der Erhöhung des Magnetfeldes im Entladungsraum wird dann die Stoßzahl der Elektronen mit den Atomen der zu analysierenden Substanz erhöht. Dies führt zu einer verstärkten Erzeugung von Sekundärelektronen und Ionen und damit zu einer Erhöhung des Entladungsstromes, d.h. einer Erniedrigung des Innenwiderstandes der Glimmentladungslampe. Infolge der Erhöhung des Entladungsstromes steigt die Spannung über dem Widerstand 43 an. Ist dagegen die Spannung über dem Widerstand 43 größer als die am Widerstand 46 abgegriffene Referenzspannung, so fließt durch den Elektromagneten 48 ein Strom in umgekehrter Richtung. Das Magnetfeld des Permanentmagneten wird dann durch den Elektromagneten geschwächt. Dadurch sinken der Entladungsstrom durch die Glimmentladungslampe 41 und damit die Spannung über dem Widerstand 43 ab. Auf diese Weise läßt sich durch Vorwahl einer bestimmten Referenzspannung leicht ein konstanter Entladungsstrom in der Glimmentladungslampe 41 einstellen.

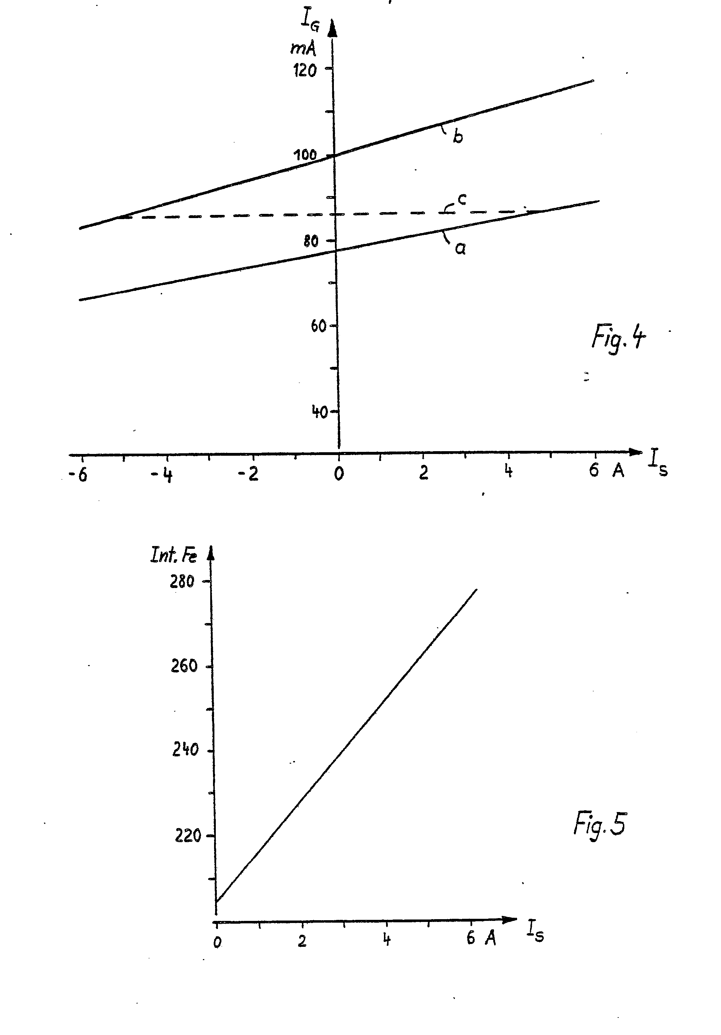

Mit einer Glimmentladungslampe gemäß Figur 2 wurde der Entladungsstrom bei Verwendung einer Kupfer- und einer Eisenprobe in Abhängigkeit vom Strom durch die Spulenwicklung des Elektromagneten 33 gemessen. Bei den Messungen bestand die Scheibe 8 jeweils aus Eisen oder Kupfer. Der Arbeitsgasdruck betrug 450 Pa, die Beschleunigungsspannung 800 V. Das Ergebnis ist in Figur 4 dargestellt. An der Abszisse ist der Spulenstrom $I_S$ in A, an der Ordinate der Entladungsstrom $I_G$ in mA aufgetragen. Die Kurve a zeigt die an Eisen, die Kurve b die an Kupfer gemessenen Werte. Wie man sieht, beträgt bei Eisen der Entladungsstrom ohne Erregung des Elektromagneten etwa 78 mA und steigt bei Erhöhung des

Spulenstromes auf 6 A linear bis auf 88 mA an. Bei Umpolung der Spule sinkt der Entladungsstrom entsprechend ab. Bei Kupfer liegen die Ergebnisse ähnlich. Hier steigt der Entladungsstrom bei Erhöhung des Spulenstromes von 0 auf 6 A von etwa 100 mA auf etwa 115 mA linear an bzw. sinkt bei Umpolung der Spule entsprechend linear ab. Der Unterschied zwischen den Entladungsströmen von Eisen und Kupfer bei gleichem Arbeitsgasdruck und gleicher Beschleunigungsspannung ist deutlich zu erkennen.

Will man beispielsweise Kupfer-Eisen-Legierungen unterschiedlicher Zusammensetzung analysieren und zusätzlich zur Beschleunigungsspannung und dem Arbeitsgasdruck auch noch den Entladungsstrom konstant halten, so kann man beispielsweise durch entsprechende Vorwahl der Referenzspannung einen Entladungsstrom von etwa 86 mA einstellen, der in Figur 4 durch die unterbrochen gezeichnete Gerade c dargestellt ist. Die sich bei den verschiedenen Proben zunächst einstellenden unterschiedlichen Entladungsströme werden dann jeweils durch entsprechende Erregung der Spule des Elektromagneten auf den vorgewählten Wert geregelt und dort konstant gehalten. Wie Figur 4 zeigt, lassen sich bei der Glimmentladungslampe nach Figur 2 mit Spulenströmen bis zu 6 A, also einem Strombelag der Magnetspule bis zu etwa 1800 Amperewindungen, ohne weiteres Änderungen des Entladungsstromes von $\pm$ 10 % erreichen. Die maximale durch den Elektromagneten erzeugte magnetische Induktion beträgt dabei ebenfalls etwa 10 % der magnetischen Induktion des Permanentmagneten.

In Figur 5 ist noch die Abhängigkeit der Intensität der Eisen-Linie (260 nm) vom Spulenstrom dargestellt. An der Abszisse ist der Spulenstrom in A, an der Ordinate die Intensität in Skalenteilen aufgetragen. Wie die Kurve zeigt, ändert sich auch die Intensität praktisch linear, jedoch erheblich stärker als der Entladungsstrom. Während der Entladungsstrom bei Erhöhung des Spulenstromes von 0 auf 6 A um etwa 10 % ansteigt, beträgt die Intensitätserhöhung etwa 30 %.

Die anmeldungsgemäße Glimmentladungslampe kann gegenüber den in den Figuren 1 und 2 dargestellten Ausführungsbeispielen noch weiter abgewandelt werden. So kann beispielsweise die Abschirmplatte 9 auch unmittelbar an den Anodenkörper 1 und den Ringmagneten 2 bzw. 32 angrenzen. Sie muß dann von der Scheibe 8 durch Isoliermaterial getrennt sein, da sie sich auf Anodenpotential befindet. Bei dieser Ausführungsform ragt dann kein auf Anodenpotential befindliches Teil der Glimmentladungslampe mehr in einen Raum hinein, der außen von einem auf Kathodenpotential befindlichen Teil umgeben ist. Die Scheibe 8 kann in diesem Fall über die Andruckschraube 11 und die Halterung 12 mit dem Kathodenpotential verbunden werden. Selbstverständlich muß dann die Isolierkappe 26 entfallen und es müssen ferner die Schraubenansätze 14 auch gegen das Anodenteil 1 beispielsweise mittels Isolierhülsen isoliert werden.

Weiterhin kann beispielsweise der Anodenkörper 1 bzw. eine entsprechende ausgebildete Ringscheibe aus gut wärmeleitendem Material den Ringmagneten 2 bzw. 32 auch kathodenseitig umfassen, wobei die Abschirmplatte 9 auch entfallen könnte. In diesem Fall würde das ringförmige Isolierteil 13 direkt am Anodenkörper 1 bzw. an der erwähnten Ringscheibe oder an einer kathodenseitig von dieser anliegenden Isolierscheibe 10 angeordnet sein.

Die elektrisch leitende Scheibe 8 kann ebenso wie bei der bekannten Glimmentladungslampe ganz oder teilweise aus der zu analysierenden Substanz bestehen, eine Oberflächenschicht aus dieser Substanz aufweisen, mit der Substanz getränkt sein oder drahtförmige Proben der Substanz in entsprechenden Bohrungen enthalten. Man wird in den letztgenannten Fällen ebenso wie bei der Analyse von gasförmigen Substanzen, die dem Arbeitsgas beigemischt werden, vorzugsweise ein Scheibenmaterial verwenden, das selbst nicht besonders stark verdampft wird und die Analyse möglichst wenig stört.

Patentansprüche
_____

1. Glimmentladungslampe zur qualitativen und quantitativen Spektralanalyse mit einem kathodenseitig durch eine auf Kathodenpotential befindliche, elektrisch leitende Scheibe abschließbaren Entladungsraum, d a d u r c h   g e k e n n z e i c h n e t ,  daß Mittel zum Erzeugen eines im Entladungsraum (3) im wesentlichen in axialer Richtung verlaufenden Magnetfeldes vorgesehen sind.

2. Glimmentladungslampe nach Anspruch 1, d a d u r c h   g e k e n n z e i c h n e t , daß der Anodenkörper (1) einen den Entladungsraum (3) umschließenden, in axialer Richtung magnetisierten Ringmagneten (2) aus Permanentmagnetmaterial enthält.

3. Glimmentladungslampe nach Anspruch 2, d a d u r c h   g e k e n n z e i c h n e t , daß die auf Kathodenpotential befindliche Scheibe (8) an ein kathodenseitig am Anodenkörper (1) oder Ringmagneten (2) angeordnetes ringförmiges Isolierteil (13) anpreßbar ist.

4. Glimmentladungslampe nach Anspruch 2 oder 3, d a - d u r c h   g e k e n n z e i c h n e t , daß der Ringmagnet (2) aus Kobalt-Seltenerd-Magnetmaterial besteht.

0004962

5. Glimmentladungslampe nach einem der Ansprüche 2 bis 4, d a d u r c h   g e k e n n z e i c h n e t ,   daß zusätzlich Mittel (4,5) zur Konzentration des magnetischen Flusses im Entladungsraum (3) vorgesehen sind.

6. Glimmentladungslampe nach Anspruch 5, d a d u r c h   g e k e n n z e i c h n e t ,   daß am Ringmagneten (2) kathodenseitig ein Polring (4) angebracht ist.

7. Glimmentladungslampe nach Anspruch 6, d a d u r c h   g e k e n n z e i c h n e t ,   daß auch an der von der Kathodenseite abgewandten Seite des Ringmagneten (2) ein Polring (5) vorgesehen ist.

8. Glimmentladungslampe nach Anspruch 6 oder 7, d a - d u r c h   g e k e n n z e i c h n e t ,   daß die Mittelöffnungen (6,7) der Polringe (4,5) sich mit zunehmendem Abstand vom Ringmagneten (2) verengen.

9. Glimmentladungslampe nach einem der Ansprüche 2 bis 8, d a d u r c h   g e k e n n z e i c h n e t ,   daß zwischen Anodenkörper (1) bzw. Ringmagnet (2) und Scheibe (8) eine ringförmige Abschirmplatte (9) aus weichmagnetischem Material angeordnet ist.

10. Glimmentladungslampe nach einem der Ansprüche 2 bis 9, d a d u r c h   g e k e n n z e i c h n e t ,   daß der Anodenkörper (1) mittels Flüssigkeit kühlbar ist.

11. Glimmentladungslampe nach Anspruch 10, d a - d u r c h   g e k e n n z e i c h n e t , daß der Anodenkörper (1) aus gut wärmeleitendem Material besteht und wenigstens einen den Ringmagneten (2) umschließenden Kühlkanal (16) enthält.

12. Glimmentladungslampe nach Anspruch 11, d a - d u r c h   g e k e n n z e i c h n e t , daß der Ringmagnet (2) vom Entladungsraum (3) durch ein Schutzrohr (19) aus gut wärmeleitendem Material getrennt ist.

13. Glimmentladungslampe nach einem der Ansprüche 2 bis 12, d a d u r c h   g e k e n n z e i c h n e t , daß der Entladungsraum (3) durch seine von der Kathodenseite abgewandte Öffnung (7) abpumpbar ist.

14. Glimmentladungslampe nach einem der Ansprüche 2 bis 13, d a d u r c h   g e k e n n z e i c h n e t , daß koaxial zum Ringmagneten (32) aus Permanentmagnetmaterial zusätzlich ein regelbarer Elektromagnet (33) vorgesehen ist.

15. Glimmentladungslampe nach Anspruch 14, d a - d u r c h   g e k e n n z e i c h n e t , daß der Elektromagnet (48) derart regelbar ist, daß beim Betrieb der Glimmentladungslampe (41) in dieser ein vorwählbarer konstanter Strom fließt.

0004962

16. Glimmentladungslampe nach Anspruch 14 oder 15, d a d u r c h   g e k e n n z e i c h n e t , daß der Ringmagnet (32) aus Permanentmagnetmaterial und der Elektromagnet (33) in axialer Richtung hintereinander innerhalb des Anodenkörpers (1) angeordnet sind.

17. Glimmentladungslampe nach Anspruch 16, d a - d u r c h   g e k e n n z e i c h n e t , daß der Elektromagnet (33) einen rohrförmigen Kern (36) aus weichmagnetischem Material besitzt.

18. Glimmentladungslampe nach Anspruch 17, d a - d u r c h   g e k e n n z e i c h n e t , daß der Elektromagnet (33) an seiner äußeren Mantelfläche und an seiner vom Ringmagneten abgewandten Stirnfläche von einem magnetischen Rückschluß (37) aus weichmagnetischem Material umgeben ist.

19. Glimmentladungslampe nach Anspruch 18, d a - d u r c h   g e k e n n z e i c h n e t , daß der magnetische Rückschluß (37) mit dem Anodenkörper (1) in gut wärmeleitender Verbindung steht.

Fig. 1

Fig. 2

Fig. 3

0004962

Fig. 4

Fig. 5

0004962

EUROPÄISCHER RECHERCHENBERICHT

Europäisches Patentamt

Nummer der Anmeldung

EP 79 10 1163

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | US - A - 3 626 234 (W. GRIMM) <br><br> * Zusammenfassung; Spalte 1, Zeile 56 bis Spalte 2, Zeile 2 und Zeilen 9-52; Figur 1 * | 1 | H 01 J 17/14 <br> G 01 J 3/10 |
| D | & DE - A - 1 910 461 <br> & NL - A - 70 02950 <br> & FR - A - 2 037 146 <br><br> -- | | |
| | US - A - 3 543 077 (W. GRIMM) <br><br> * Spalte 1; Zusammenfassung, Zeilen 15-24; Spalte 3, Zeile 43 bis Spalte 4, Zeile 43; Figur * | 1 | RECHERCHIERTE SACHGEBIETE (Int. Cl.²) <br><br> H 01 J 17/14 <br> G 01 J 3/10 <br> H 01 J 61/02 |
| D | & NL - A - 68 04118 <br> & FR - A - 1 580 267 <br> & GB - A - 1 179 825 <br> & DE - A - 1 589 389 <br> & BE - A - 716 344 <br> & CH - A - 501 218 <br><br> -- | | 61/16 <br> 27/00 |
| | US - A - 3 833 829 (O. REIFENSCHWEILER) <br><br> * Spalte 1, Zeilen 3-16,33-41; Spalte 2, Zeilen 51-67; Figur * | 5-7 | |
| | & DE - A - 2 261 720 <br> & GB - A - 1 351 582 <br> & FR - A - 2 167 619 <br> & NL - A - 72 00001 <br><br> -- | | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur |
| | US - A - 3 502 863 (H. TSUYAMA et al.) <br><br> * Spalte 1; Zusammenfassung, Zeilen 15-26 und Zeile 52 bis Spalte 2, Zeile 8, Zeile 23 bis Spalte 3, Zeile 4; Figuren 1-3 * <br><br> --                ./. | 2,14 | T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 05-07-1979 | MAUGAIN |

EPA form 1503.1  06.78

Europäisches
Patentamt

**EUROPÄISCHER RECHERCHENBERICHT**

Nummer der Anmeldung

EP 79 10 1163

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | US - A - 2 636 990 (J.D. GOW) <br> * Spalte 2, Zeile 21 bis Spalte 3, Zeile 9; Spalte 4, Zeile 25 bis Spalte 5, Zeile 3; Figuren 1,2 * <br><br> -- | 2,14 | |
| | US - A - 3 528 034 (E.D. SHIPLEY et al.) <br> * Spalte 1, Zusammenfassung, Zeilen 14-22; Spalte 2, Zeilen 25-37 und Zeile 53 bis Spalte 3, Zeile 2; Figuren 1,3,5 * <br><br> -- | 2 | |
| | INSTRUMENTS AND EXPERIMENTAL TECHNIQUES, Band 16, Nr. 1, Teil 2, Januar-Februar 1973, New York, USA, A. YA. ABER et al.: "Installation for investigating the optical properties of solids in the vacuum ultraviolet range", Seiten 238-239 <br> * Seite 239, Absätze 2,3; Figur 2 * <br><br> ---- | 2,14 | RECHERCHIERTE SACHGEBIETE (Int. Cl.²) |

EPA Form 1503.2  06.78